# EUROPEAN PATENT SPECIFICATION

(11) **EP 4 207 337 B1**
(45) Date of publication and mention of the grant of the patent: **27.08.2025**
(21) Application number: 22739842.7
(22) Date of filing: 10.01.2022
(51) Int. Cl.: H01M 4/04, H01M 10/04, H01M 4/139, B23D 1/08

(54) **ELECTRODE MANUFACTURING DEVICE AND ELECTRODE MANUFACTURING METHOD USING THE SAME**
ELEKTRODENHERSTELLUNGSVORRICHTUNG UND ELEKTRODENHERSTELLUNGSVERFAHREN DAMIT
DISPOSITIF DE FABRICATION D'ÉLECTRODE ET PROCÉDÉ DE FABRICATION D'ÉLECTRODE L'UTILISANT

(30) Priority: 12.01.2021 KR 20210003822; 06.01.2022 KR 20220002295
(43) Date of publication of application: 05.07.2023
(73) Proprietor: LG Energy Solution, Ltd., Seoul 07335 (KR)
(72) Inventor: KIM, Sung Kyum, Daejeon 34122 (KR); SEOL, Jeong Soo, Daejeon 34122 (KR); JUNG, Eui Young, Daejeon 34122 (KR); CHO, Insang, Daejeon 34122 (KR)
(74) Representative: Plasseraud IP
(86) International application number: PCT/KR2022/095005
(87) International publication number: WO 2022/154650

(56) References cited:
- WO-A1-2012/023422
- JP-A- 2000 268 817
- JP-A- 2012 151 064
- JP-A- 2017 136 559
- JP-A- 2017 136 559
- JP-A- 2018 081 776
- JP-A- 2018 113 110
- JP-A- 2018 113 110
- JP-B2- 5 659 818
- KR-A- 20130 025 958
- KR-A- 20130 025 958
- KR-A- 20190 127 283
- KR-A- 20190 127 283
- KR-A- 20190 143 253
- KR-A- 20190 143 253
- US-B2- 11 597 115

## Description

### [TECHNICAL FIELD]

### Cross Citation with Related Application(s)

This application claims the benefit of Korean Patent Application No. 10-2021-0003822 filed on January 12, 2021 and Korean Patent Application No. 10-2022-0002295 filed on January 6, 2022 in the Korean Intellectual Property Office.

The present disclosure relates to an electrode manufacturing device and an electrode manufacturing method using the same, and more particularly, to an electrode manufacturing device that automatically separates and discards a normal electrode and a defective electrode, and automatically reconnects a normal electrode, thereby improving equipment efficiency and productivity, and an electrode manufacturing method using the same.

### [BACKGROUND ART]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

The secondary battery may be classified based on the shape of a battery case into a cylindrical battery having an electrode assembly mounted in a cylindrical metal can, a prismatic battery having an electrode assembly mounted in a prismatic metal can, and a pouch type battery having an electrode assembly mounted in a pouch-shaped case made of a laminated aluminum sheet.

Further, the secondary battery can be formed by inserting an electrode assembly composed of a positive electrode, a negative electrode, and a separator into a case, and then sealing the case. The electrode assembly can be formed by interposing a separator between the positive electrode and the negative electrode, and winding the electrode in a jelly-roll type many times or laminating it in a plurality of layers.

Meanwhile, in recent years, secondary batteries perform a roll-to-roll process when manufacturing raw materials for electrodes such as a positive electrode, a negative electrode and a separator. However, if the raw materials contain defects during the operation of the roll-to-roll process, it is necessary to discard the defective parts at the beginning of the process and then reconnect the normal parts.

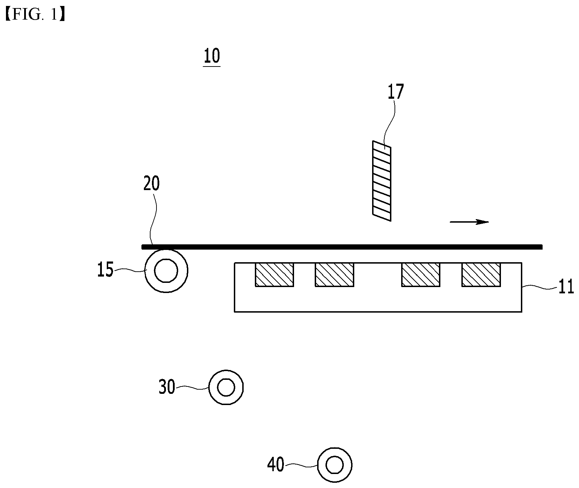

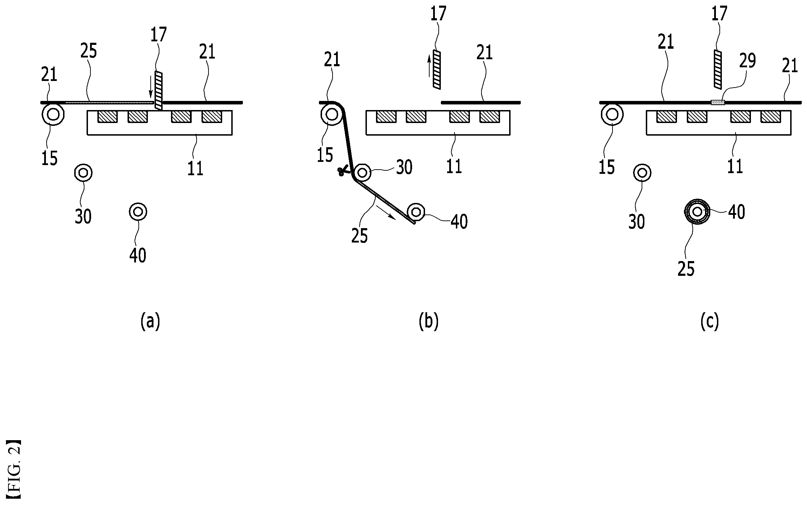

Fig. 1 is a diagram showing a conventional electrode manufacturing device. Fig. 2 is a diagram showing a state where in the electrode manufacturing device of Fig. 1, defective electrodes are separated and discarded, and normal electrodes are reconnected.

Referring to Fig. 1, the conventional electrode manufacturing device 10 includes an electrode suction unit 11, an electrode moving unit 15, and a cutting unit 17. Here, the electrode suction unit 11 can suction an electrode 20 moved by the electrode moving unit 15.

Referring to Fig. 2(a), the electrode 20 may include a normal electrode 21 and a defective electrode 25. Here, when the defective electrode 25 passes through the electrode suction unit 11, the conventional electrode manufacturing device 10 manually cuts between the normal electrode 21 and the defective electrode 25 via the cutting unit 17. Referring to Fig. 2(b), the defective electrode 25 cut by the cutting unit 17 in Fig. 2(a) is manually wound around the winding unit 40 along the guide roll 30, and the space between the defective electrode 25 and the normal electrode 21 is manually cut. Referring to Fig. 2(c), the normal electrode 21 manually cut in Fig. 2(b) manually attaches and reconnects the normal electrode 21 and a tape 29 cut by the cutting unit 17 of Fig. 2(a).

However, the conventional electrode manufacturing device 10 manually performs both the discarding and winding of the defective electrode 25 as shown in Fig. 2, and also manually performs the reconnection between the normal electrodes 21, which causes a problem that equipment efficiency and productivity are deteriorated. Thereby, there is a growing need to develop an electrode manufacturing device that automatically separates the defective electrode and the normal electrode, and can automatically perform the disposal of the defective electrode and the reconnection of the normal electrode, unlike the conventional electrode manufacturing device 10.

JP 2000 268817 A discloses an electrode manufacturing device comprising: a first electrode unit and a second electrode holding unit that are configured to hold a first electrode, the first electrode including a normal electrode and a defective electrode; a third electrode holding unit that is configured to hold a second electrode; a rotating unit that is connected to an end of the first electrode holding unit and is configured to rotate the first electrode holding unit; a cutting unit that is configured to cut between the normal electrode and the defective electrode wherein the rotating unit can rotate so that the first electrode holding unit is arranged on the same plane as the second electrode holding unit or the third electrode holding unit.

### [DETAILED DESCRIPTION OF THE INVENTION]

### [Technical Problem]

It is an object of the present disclosure to provide an electrode manufacturing device that automatically separates and discards a normal electrode and a defective electrode, and automatically reconnects a normal electrode, thereby improving equipment efficiency and productivity, and an electrode manufacturing method using the same.

The objects of the present disclosure are not limited to the aforementioned objects, and other objects which are not described herein should be clearly understood by those skilled in the art from the following detailed description and the accompanying drawings.

### [Technical Solution]

The invention is as defined in the appended claims.

According to the present invention, there is provided an electrode manufacturing device comprising: a first electrode suction unit and a second electrode suction unit that suction a first electrode, with the first electrode including a normal electrode and a defective electrode; a third electrode suction unit that suctions a second electrode; a rotating unit that is connected to an end of the first electrode suction unit and rotates the first electrode suction unit; a cutting unit that cuts between the normal electrode and the defective electrode; and a taping unit that is positioned apart from and facing the cutting unit, wherein, when the cutting operation of the cutting unit is completed, the rotating unit rotates so that the first electrode suction unit is arranged on the same plane as the second electrode suction unit or the third electrode suction unit.

The first electrode suction unit, the second electrode suction unit, and the third electrode suction unit may respectively include a suction plate.

The second electrode suction unit and the third electrode suction unit may be arranged separately in a direction perpendicular to each other.

The rotating unit may be composed of a motor and a worm gear.

The cutting unit may be composed of a rodless cylinder.

The cutting unit includes a first cutting unit and a second cutting unit, and the taping unit includes a first taping unit and a second taping unit, the first cutting unit and the first taping unit are positioned between the first electrode suction unit and the second electrode suction unit, and the second cutting unit and the second taping unit are positioned between the first electrode suction unit and the third electrode suction unit.

The normal electrode includes a first normal electrode and a second normal electrode, and the defective electrode may be positioned between the first normal electrode and the second normal electrode.

The first normal electrode may be positioned on the second electrode suction unit, and the first cutting unit cuts between the first normal electrode and the defective electrode.

The first electrode suction unit may be rotated by the rotating unit and connected to the third electrode suction unit, and the defective electrode may be connected to the second electrode by the second taping unit.

The second taping unit may attach a first adhesive sheet between the defective electrode and the second electrode.

The electrode manufacturing device may further include a winding unit that winds at least a part of the connected defective electrode and the second electrode.

A length wound by the winding unit may be equal to or greater than the length of the defective electrode.

The second normal electrode is positioned in the first electrode suction unit by the winding unit, and the second cutting unit may cut between the second normal electrode and the defective electrode.

The first electrode suction unit may be rotated by the rotating unit and connected to the second electrode suction unit, and the second normal electrode may be connected to the first normal electrode by the first taping unit.

The first taping unit may attach a second adhesive sheet between the first normal electrode and the second normal electrode.

Whether or not the cutting operation is completed may be determined based on the position of the cutting unit.

The electrode manufacturing device further includes a detection unit, the detection unit determines whether or not a defective electrode is included in the first electrode, and suction operations of the first electrode suction unit and the second electrode suction unit may be performed based on the information acquired by the detection unit.

According to another embodiment of the present disclosure, there is provided a method for manufacturing an electrode , which is performed by the above-mentioned electrode manufacturing device, the method comprising the steps of: cutting the first electrode positioned in the first electrode suction unit and the second electrode suction unit by the cutting unit, thus separating a normal electrode from a defective electrode; positioning the first electrode suction unit on the same plane as the third electrode suction unit by rotating the rotating unit, and connecting the defective electrode on the first electrode suction unit and the second electrode on the third electrode suction unit by the taping unit.

### [Advantageous Effects]

According to embodiments of the present disclosure, there is provided an electrode manufacturing device that can automatically separate a normal electrode from a defective electrode, and automatically reconnect a normal electrode, thereby improving equipment efficiency and productivity.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a conventional electrode manufacturing device;
Fig. 2 is a diagram showing a state where in the electrode manufacturing device of Fig. 1, defective electrodes are separated and discarded, and normal electrodes are reconnected;
Fig. 3 is a diagram showing an electrode manufacturing device according to an embodiment of the present disclosure; and
Figs. 4 to 9 are diagrams showing that in the electrode manufacturing device of Fig. 3, defective electrodes are separated and discarded, and normal electrodes are reconnected.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, the electrode manufacturing device according to an embodiment of the present disclosure will be described.

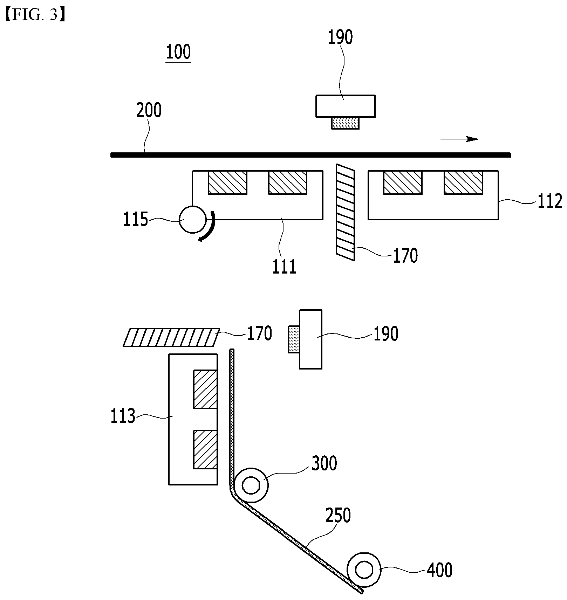

Fig. 3 is a diagram showing an electrode manufacturing device according to an embodiment of the present disclosure.

Referring to Fig. 3, an electrode manufacturing device 100 according to the present embodiment includes a first electrode suction unit 111 and a second electrode suction unit 112 that suction a first electrode 200; a third electrode suction unit 113 that suctions a second electrode 250; a cutting unit 170; and a taping unit 190.

The first electrode 200 may be a positive electrode or a negative electrode commonly used in the manufacture of an electrode. At this time, the structure, shape, constituent material, etc. of the positive electrode or negative electrode are not limited. Further, the second electrode 250 may be a discarded electrode. As an example, the second electrode 250 may be a discarded electrode corresponding to a defective electrode at the time of manufacturing the electrode.

More specifically, the first electrode suction unit 111, the second electrode suction unit 112, and the third electrode suction unit 113 may each include a suction plate. As an example, in the first electrode suction unit 111, the second electrode suction unit 112, and the third electrode suction unit 113, the surface of the suction plate is finely perforated, and a hood is installed in the lower part of the suction plate, and then a hose can be installed in the lower part of the hood. Suction can be performed via a hose using a ring blower. However, the present disclosure is not limited thereto, and any part capable of sucking the first electrode 200 or the second electrode 250 can be used without limitation.

The first electrode suction unit 111 may have a rotating part 115 formed at one end of the first electrode suction unit 111. Also, the first electrode suction unit 111 may be rotated around the rotating unit 115 as an axis.

More specifically, the rotating unit 115 may be composed of a motor and a worm gear. However, the present disclosure is not limited thereto, and any part capable of rotating the first electrode suction unit 111 at a predetermined angle can be used without limitation.

Further, the first electrode suction unit 111 may be connected to the second electrode suction unit 112 or the third electrode suction unit 113 according to the rotation of the rotating unit 115. In other words, the first electrode suction unit 111 may be arranged on the same plane as the second electrode suction unit 112 or the third electrode suction unit 113 according to the rotation of the rotating unit 115. Thereby, the first electrode suction unit 111 and the second electrode suction unit 112 can each allow the first electrode 200 to suction on the same plane. Further, the first electrode suction unit 111 and the third electrode suction unit 113 can allow the first electrode 200 or the second electrode 250 to suction on the same plane, respectively.

When the first electrode 200 is cut by a cutting unit 170, the first electrode suction unit 111 can be rotated by the rotating unit 115. More specifically, the first electrode suction unit 111 is connected to the second electrode suction unit 112 or the third electrode suction unit 113, but can be rotated by the rotating unit 115 when it is cut by the cutting unit 170. At this time, the first electrode suction unit 111 may be connected to the second electrode suction unit 112 or the third electrode suction unit 113 that have not been connected by the rotating unit 115.

Further, the second electrode suction unit 112 and the third electrode suction unit 113 may be separated from each other with respect to the first electrode suction unit 111. As an example, the second electrode suction unit 112 and the third electrode suction unit 113 may be separated from each other by the same distance with respect to the first electrode suction unit 111. The distance may be equal to or greater than the length of the first electrode suction unit 111.

Further, the second electrode suction unit 112 and the third electrode suction unit 113 may be arranged separately from each other in a direction having an angle of 90 degrees to 180 degrees with respect to the first electrode suction part 111. As an example, the second electrode suction unit 112 and the third electrode suction unit 113 may be arranged separately in a direction perpendicular to each other.

Further, the cutting unit 170 can cut the first electrode 200. Here, the first electrode 200 includes a normal electrode and a defective electrode, so that the cutting unit 170 can cut between the normal electrode and the defective electrode in the first electrode 200. As an example, the cutting unit 170 may cut a boundary line between the normal electrode and the defective electrode. Alternatively, the cutting unit 170 cuts between the normal electrode and the defective electrode, and may cut a portion adjacent to the normal electrode based on a boundary line between the normal electrode and the defective electrode.

More specifically, the cutting unit 170 may be composed of a rodless cylinder. As another example, the cutting unit 170 may be composed of a saw type knife, but can be driven by a cylinder. However, the present disclosure is not limited thereto, and any part capable of cutting the first electrode 200 can be used without limitation.

Further, the taping part 190 can attach any one of a metal foil, a general tape, an insulating tape, and a conductive tape to the first electrode 200 and/or the second electrode 250 as an adhesive sheet. Moreover, the taping part 190 may coat the first electrode 200 and/or the second electrode 250 with an adhesive composition such as an adhesive binder or a conductive binder. Thereby, the first electrode 200 and/or the second electrode 250 may be connected to each other without interfering with the current flowing through the first electrode 200 and the second electrode 250. However, the present disclosure is not limited thereto, and various types of materials can be adhered or coated.

Further, the cutting unit 170 cuts the first electrode 200, and the taping unit 190 may be positioned separately in a direction facing the cutting unit 170. As an example, the cutting part 170 is positioned in the lower part of the first electrode 200 with respect to the first electrode 200, and the taping unit 190 may be positioned in the upper part of the first electrode 200. Conversely, the cutting unit 170 is positioned in the upper part of the first electrode 200 with respect to the first electrode 200, and the taping unit 190 may be positioned in the lower part of the first electrode 200.

The cutting unit 170 includes a first cutting unit and a second cutting unit, and the taping part 190 includes a first taping unit and a second taping unit. Here, the first cutting unit and the first taping unit may be positioned between the first electrode suction unit 111 and the second electrode suction unit 112. Thereby, the first electrode 200 positioned on the first electrode suction unit 111 and the second electrode suction unit 112 may be cut and reconnected by the first cutting unit and the first taping unit.

Further, the second cutting unit and the second taping unit may be positioned between the first electrode suction unit 111 and the third electrode suction unit 113. Thereby, the first electrode 200 and/or the second electrode 250 positioned on the first electrode suction unit 111 and the third electrode suction unit 113 can be cut and reconnected by the second cutting unit and the second taping unit.

Referring to Fig. 3, the electrode manufacturing device 100 according to the present embodiment may further include a guide roll 300 that guides the second electrode 250 positioned on the third electrode suction unit 113, and a winding unit 400 that winds the second electrode 250.

More specifically, the guide roll 300 may guide a path in which the second electrode 250 may be wound by the winding unit 400. Here, the guide roll 300 may be positioned adjacent to the end of the third electrode suction unit 113. Further, the winding unit 400 can wind the second electrode 250 by a predetermined length. As an example, the winding unit 400 can wind the second electrode 250 by the length of the defective electrode included in the first electrode 200.

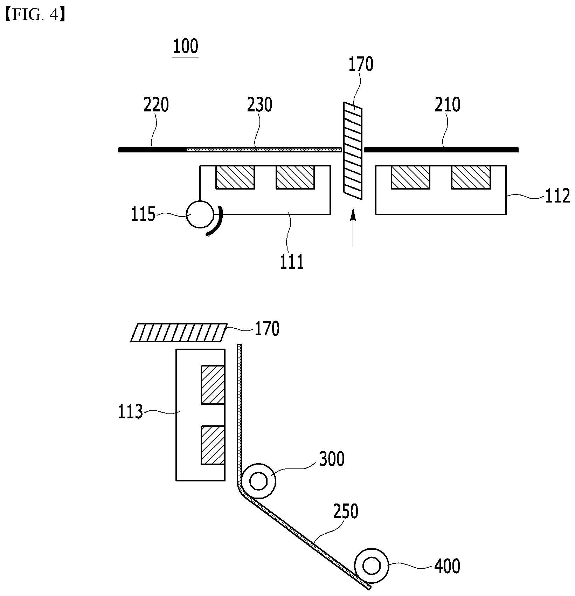

Figs. 4 to 9 are diagrams showing that in the electrode manufacturing device of Fig. 3, defective electrodes are separated and discarded, and normal electrodes are reconnected.

Referring to Figs. 3 and 4 to 9, an electrode manufacturing process of separating and discarding the defective electrode included in the first electrode 200 and reconnecting the normal electrode through the electrode manufacturing device 100 according to the present embodiment will be described.

Here, the electrode manufacturing device 100 according to the present embodiment includes a separate control unit (not shown), and thus can control driving of a first electrode suction unit 111 and a second electrode suction unit 112; a third electrode suction unit 113; a cutting unit 170; and a taping unit 190.

The control unit (not shown) may process information for determining whether or not the first electrode 200 is defective, and can control driving of the first electrode suction unit 111 and the second electrode suction unit 112; the third electrode suction unit 113; the cutting unit 170; and the taping unit 190, via the information on whether or not the first electrode 200 is defective.

Here, whether or not the first electrode 200 is defective may be information acquired by a separate detection unit (not shown). A detection unit (not shown) can determine whether or not the first electrode 200 is defective. A detection unit (not shown) may determine whether or not the first electrode 200 is defective based on a coating defect or the like. Alternatively, the detection unit (not shown) may determine the presence or absence of defects via a tag previously displayed on the first electrode 200. The detection unit may transmit information for determining whether or not the first electrode 200 is defective to a control unit (not shown), and the control unit (not shown) may control the operation of each component based on information transmitted from the detection unit (not shown). Meanwhile, an example of the detection unit (not shown) that can be used in the electrode manufacturing device 100 of the present embodiment may include, but is not limited to, a vision for determining the presence or absence of defects, based on an image.

Further, the detection units (not shown) used in the present embodiment may be formed in plural numbers, and in addition to confirming whether or not the first electrode 200 is defective, it may be arranged at a position necessary for confirming whether or not to permit the operation of each component. The detection unit (not shown) may transmit information acquired at the corresponding position to the control unit (not shown), and the control unit (not shown) may instruct the operation of each component based on this.

The control unit (not shown) may include one or more selected from CPU (Central Processing Unit), RAM (Random Access Memory), GPU (Graphic Processing Unit), one or more microprocessors, and electronic components capable of processing input data according to other predetermined logic. As an example, the control unit (not shown) develops an electrode manufacturing process capable of being performing from an electrode manufacturing device described later on the RAM, and can perform various processes such as controlling the driving of the first electrode suction unit 111 and the second electrode suction unit 112; the third electrode suction unit 113; the cutting unit 170; and the taping unit 190 according to the developed program.

Referring to Figs. 3 and 4, the first electrode 200 may include a normal electrode 210 and 220 and a defective electrode 230. Here, the normal electrode may include a first normal electrode 210 and a second normal electrode 220, and the defective electrode 230 may be positioned between the first normal electrode 210 and the second normal electrode 220.

Referring to Fig. 4, the first electrode suction unit 111 may suction the first electrode 200, the first normal electrode 210, the defective electrode 230, and the second normal electrode 220. The second electrode suction unit 112 may suction the first normal electrode 210. At this time, the first normal electrode 210 is positioned on the second electrode suction unit 112, and the cutting unit 170 can cut between the first normal electrode 210 and the defective electrode 230. Here, the cutting unit 170 may be described as the above-mentioned first cutting unit. Further, the first electrode suction unit 111 may be rotated by the rotating unit 115. Thereby, the electrode manufacturing device 100 according to the present embodiment can automatically separate the defective electrode 230 included in the first electrode 200 from the first normal electrode 210.

Meanwhile, whether or not the first electrode 200 includes the defective electrode 230 may be determined via the above-mentioned detection unit (not shown). Further, the detection unit (not shown) may confirm that the defective electrode 230 is positioned on the first electrode suction unit 111 or that the first normal electrode 210 is positioned on the third electrode suction unit 113.

In the above-mentioned process, the operation of each configuration can be controlled by a control unit (not shown), and the control unit (not shown) may use information transmitted from the detection unit (not shown) or each component. As a specific example, the first electrode 200 includes the defective electrode 230, and when it is confirmed that the defective electrode 230 is positioned on the first electrode suction unit 111 or the first normal electrode 210 is positioned on the third electrode suction unit 113, the first electrode suction unit 111 and the second electrode suction unit 112 can be driven by the control unit.

Further, the control unit (not shown) may instruct the operation of the other configuration after completion of the operation of the specific configuration is conformed. Specifically, when it is confirmed whether the control unit (not shown) holds the first electrode 200 by the first electrode suction unit 111 and the second electrode suction unit 112, it can instruct an operation to the cutting unit 170 so as to separate the first normal electrode 210 and the defective electrode 230. Further, after the cutting operation of the cutting unit 170 is completed, the control unit (not shown) may cause the rotating unit 115 to rotate the first electrode suction unit 111 in a direction in which the third electrode suction unit 113 is located. Here, the completion of the cutting operation of the cutting unit 170 can be confirmed through the position of the cutting unit 170. As an example, it can be determined whether the cutting unit 170 has deviated from the device driving space in which the first electrode 200 is located, or, as another example, whether the cutting unit 170 has returned to its original position. The position of the cutting unit 170 may be detected via a detection unit (not shown).

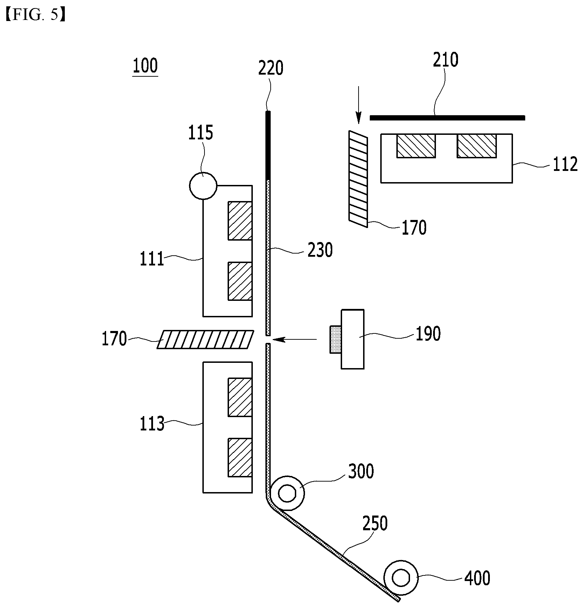

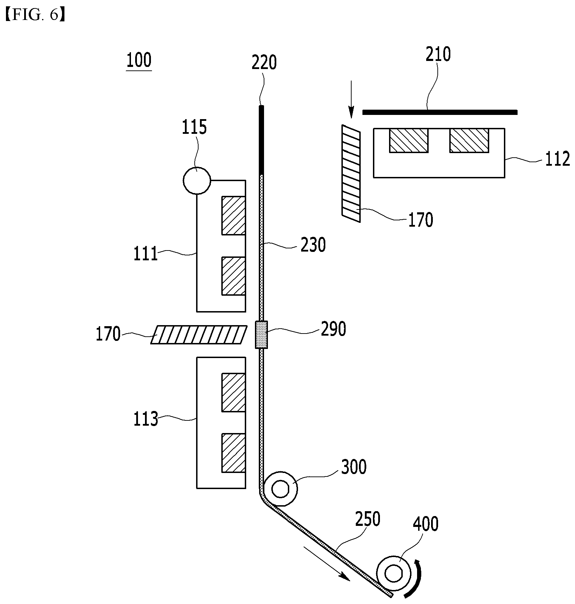

Referring to Figs. 5 and 6, the first electrode suction unit 111 may be rotated by the rotating unit 115 and arranged on the same plane as the third electrode suction unit 113. Thereby, the first electrode suction unit 111 may be connected to the third electrode suction unit 113. Further, the taping unit 190 may connect the defective electrode 230 positioned on the first electrode suction unit 111 and the second electrode 250 positioned on the third electrode suction unit 113. Here, the taping unit 190 may be described as the above-mentioned second taping unit. Further, the taping unit 190 can attach an adhesive sheet 290 between the defective electrode 230 positioned on the first electrode suction unit 111 and the second electrode 250 positioned on the third electrode suction unit 113. Thereby, in the electrode manufacturing device 100 according to the present embodiment, the defective electrode 230 included in the first electrode 200 can be automatically connected to the second electrode 250.

Here, when the first electrode suction unit 111 and the third electrode suction unit 113 are arranged on the same plane, the third electrode suction unit 113 may be in a state of holding the second electrode 250 in advance. At this time, the first electrode suction unit 111 may also be in a state of holding the first electrode 200, that is, the defective electrode 230.

Further, here, the operation of the taping unit 190 may be performed after the correspondence between the first electrode suction unit 111 and the third electrode suction unit 113 is confirmed. The correspondence between the first electrode suction unit 111 and the third electrode suction unit 113 can be determined by whether or not the rotating unit 115 is stopped. Alternatively, through a separate detection unit (not shown) positioned around the first electrode suction unit 111 and the third electrode suction unit 113 moved by the rotating unit 115, it can be determined whether the first electrode suction unit 111 and the third electrode suction unit 113 are positioned on the same plane. Meanwhile, as described above, the operation of each configuration may be performed by the control unit, and more specifically, the control unit can instruct the operation of the taping unit 190 after the correspondence between the first electrode suction unit 111 and the third electrode suction unit 113 is confirmed.

Referring to Fig. 6, the adhesive sheet 290 may be attached between the defective electrode 230 positioned on the first electrode suction unit 111 and the second electrode 250 positioned on the third electrode suction unit 113. Further, the winding unit 400 can wind the defective electrode 230 and the second electrode 250 to which the adhesive sheet 290 is attached along a guide roll 300 by a predetermined length. The winding unit 400 may wind at least a part of the connected defective electrode 230 and the second electrode 250. As an example, the winding unit 400 can wind the defective electrode 230 and the second electrode 250 to which the adhesive sheet 290 is attached so as to be equal to the length of the defective electrode 230 or to be longer than the length of the defective electrode 230. Thereby, the electrode manufacturing device 100 according to the present embodiment can allow the defective electrode 230 positioned on the first electrode suction unit 111 to move onto the third electrode suction unit 113, and a second normal electrode 220 may be sucked into the second electrode suction unit 112.

Here, the suction operations of the first electrode suction unit 111 and the third electrode suction unit 113 may be stopped in the same manner as or earlier than the winding operation of the winding unit 400.

Further, here, the operation of the winding unit 400 or a stop of the suction operations of the first electrode suction unit 111 and the third electrode suction unit 113 may be performed after the operation of the taping unit 190 is completed. The completion of the operation of the taping part 190 may be determined according to the position of the taping part 190 or whether the adhesive sheet 290 is attached to the defective electrode 230 and the second electrode 250. At this time, the position of the taping unit 190 or the presence or absence of adhesion of the adhesive sheet 290 may be confirmed by a detection unit (not shown).

Further, here, the winding length by the winding unit 400 may be determined based on information collected by the detection unit (not shown). For example, the detection unit (not shown) may confirm the size of the defective electrode 230, and based on this, the operation time of the winding unit 400 can be adjusted. As another example, the detection unit (not shown) determines whether the defective electrode 230 is completely moved so as to be positioned on the third electrode suction unit 113, or whether the second normal electrode 220 is completely moved so as to be completely located on the first electrode suction unit 111. Based on this, the operation of the winding unit 400 may be stopped.

Meanwhile, as described above, the operation of each configuration may be instructed by a control unit (not shown). As a specific example, after the operation of the taping unit 190 is completed, the control unit can instruct the operation of the winding unit 400 or the suction stop of the first electrode suction unit 111 and the third electrode suction unit 113. Further, the control unit (not shown) can control the operation time of the winding unit 400 based on information acquired from the detection unit (not shown) or each configuration.

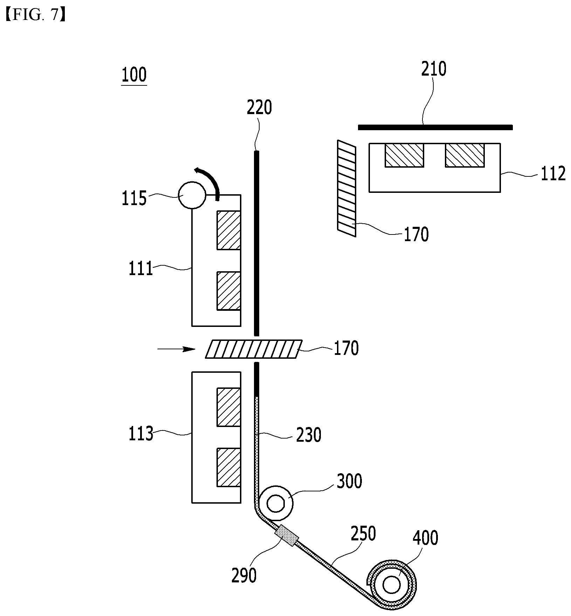

Referring to Fig. 7, the second normal electrode 220 is positioned on the first electrode suction unit 111, and the cutting portion 170 can cut between the second normal electrode 220 and the defective electrode 230. Further, the first electrode suction unit 111 may be rotated by the rotating unit 115. At this time, the second normal electrode 220 cut by the cutting unit 170 may be positioned on the first electrode suction unit 111. Here, the cutting unit 170 may be described as the above-mentioned second cutting unit. Thereby, the electrode manufacturing device 100 according to the present embodiment may automatically separate the second normal electrode 220 and the defective electrode 230 included in the first electrode 200.

Here, when it is confirmed that the second normal electrode 220 is positioned on the first electrode suction part 111 or the bad electrode 230 is positioned on the third electrode suction part 113, the first electrode suction unit 111 and the third electrode suction unit 113 can be driven. At this time, the position of the second normal electrode 220 or the defective electrode 230 may be confirmed by a detection unit (not shown). Further, the first electrode suction unit 111 and the third electrode suction unit 113 may be driven based on the winding operation stop of the winding unit 400.

When it is confirmed whether the first electrode 200 is held by the first electrode suction unit 111 and the third electrode suction unit 113, the cutting unit 170 can separate the second normal electrode 220 and the defective electrode 230. When the operation of the cutting unit 170 is completed, the rotating unit 115 may rotate so that the first electrode suction unit 111 moves in a direction in which the second electrode suction unit 112 is located. At this time, the completion of the cutting operation of the cutting unit 170 can be confirmed via the position of the cutting unit 170. Meanwhile, as described above, the operation of each configuration may be performed by a control unit (not shown), and the control unit (not shown) may use information acquired by the detection unit (not shown) or information transmitted from each component in controlling the operation of each component. For the operation of each configuration according to the determination of the controller, the description of Fig. 4 can be referred to, and thus a detailed description thereof will be omitted.

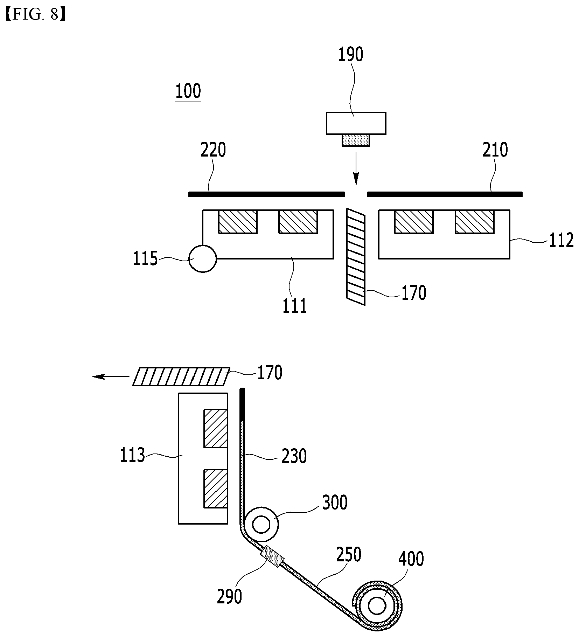

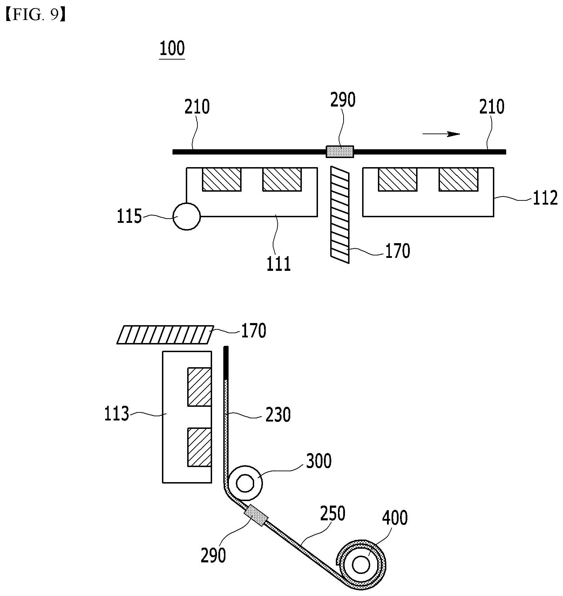

Referring to Figs. 8 and 9, the first electrode suction unit 111 may be rotated by the rotating unit 115 and rearranged on the same plane as the second electrode suction unit 112. Thereby, the first electrode suction unit 111 may be reconnected with the second electrode suction unit 112. Further, the taping part 190 may be connected to the second normal electrode 220 positioned on the first electrode suction part 111 and the first normal electrode 210 positioned on the second electrode suction part 112. Here, the taping unit 190 may be described as the above-mentioned first taping part. Further, the taping unit 190 can attach an adhesive sheet 290 between the second normal electrode 220 positioned on the first electrode suction part 111 and the first normal electrode 210 positioned on the second electrode suction part 112. Thereby, the electrode manufacturing device 100 according to the present embodiment may automatically connect the first normal electrode 210 and the second normal electrode 220 included in the first electrode 200. That is, the defective electrode 230 included in the first electrode 200 may be automatically removed.

Here, when the first electrode suction unit 111 and the second electrode suction unit 112 are arranged on the same plane, the second electrode suction unit 112 may be in a state of holding the first normal electrode 210. At this time, the first electrode suction unit 111 may also be in a state of holding the second normal electrode 220.

Further, here, the operation of the taping unit 190 may be performed after the correspondence between the first electrode suction unit 111 and the second electrode suction unit 112 is confirmed. For detailed information on this and the operation of each configuration according to the determination of the control unit, the descriptions of Figs. 5 and 6 may be referred to, and thus detailed description thereof will be omitted.

Thereby, referring to Figs. 4 and 9, the electrode manufacturing device 100 according to the present embodiment can automatically reconnect the normal electrodes 210 and 220 while automatically discharging the defective electrode 230, thereby improving equipment efficiency and productivity as compared with the conventional case.

Next, a method of manufacturing an electrode according to another embodiment of the present disclosure will be described based on the contents described with reference to Figs. 3 to 9. The electrode manufacturing method described below is performed by the above-mentioned electrode manufacturing device, and the operation of each step may be controlled by the control unit. Further, in describing the electrode manufacturing method of the present embodiment, the reference numerals such as S100 are only indicated for distinguishing each step, and are not shown in the figures.

The electrode manufacturing method S100 according to the present embodiment may include a step S110 of cutting the first electrode 200 positioned between the first electrode suction unit 111 and a second electrode suction unit 112 by a cutting unit 170, a step S120 of positioning on the same plane as the third electrode suction unit 113 by rotating the first electrode suction unit 111, a step S130 of connecting the first electrode 200 on the first electrode suction unit 111 and the second electrode 250 on the third electrode suction unit 113 by the taping unit 190, a step S140 of winding at least a part of the first electrode 200 and the second electrode 250 to which the winding unit 400 is connected, a step S150 of cutting the first electrode 200 positioned between the first electrode suction unit 111 and the third electrode suction unit 113 by the cutting unit 170, a step S160 of positioning on the same plane as the second electrode suction unit 112 by rotating the first electrode suction unit 111, and a step S170 of connecting the first electrode 200 on the first electrode suction part 111 and the first electrode 200 on the second electrode suction part 112 by the first electrode 200.

Meanwhile, the electrode manufacturing method S100 according to the present embodiment may further include the step of confirming whether the first electrode 200 includes the defective electrode 230 before the step S110 of cutting the first electrode 200. At this time, the presence or absence of the defective electrode 230 can be confirmed by a detection unit (not shown).

The step S110 of cutting the first electrode 200 can be performed depending on whether the first electrode 200 includes the defective electrode 230. The above-mentioned step S110 can be embodied through a step of positioning the defective electrode 230 on the first electrode suction unit 111 and the first normal electrode 210 on the second electrode suction unit 112, a step of holding the defective electrode 230 by the first electrode suction unit 111 and holding the first normal electrode 210 by the second electrode suction unit 112, and a step of separating the defective electrode 230 and the first normal electrode 210 by the cutting unit 170. Here, the cutting unit 170 may be a first cutting unit. Detailed description of each step may be specifically given with reference to Fig. 4 and a description thereof, and thus a detailed description will be omitted.

The step S120 of positioning the first electrode suction unit 111 and the third electrode suction unit 113 on the same plane by rotating the first electrode suction unit 111 can be performed after the completion of the operation of the cutting unit 170 is confirmed. The step S130 of connecting the first electrode 200 on the first electrode suction unit 111 and the second electrode 250 on the third electrode suction unit 113 by the taping unit 190 can be performed after the correspondence between the first electrode suction unit 111 and the third electrode suction unit 113 is confirmed. Here, the taping unit 190 can connect the defective electrode 230 and the second electrode 250, and the taping unit 190 may be a second taping unit. The above-mentioned steps S120 and S130 can be described in detail with reference to Figs. 4 to 6 and a description thereof, and thus a detailed description will be omitted.

The step S140 of winding at least a part of the first electrode 200 and the second electrode 250 to which the winding unit 400 is connected can be performed after the operation of the taping unit 190 is completed. The above-mentioned step S140 can be embodied through a step of stopping the suction of the first electrode suction unit 111 and the third electrode suction unit 113, a step of winding at least a part of the first electrode 200 and the second electrode 250 to which the winding unit 400 is connected, and a step of stopping the winding operation by the winding unit 400. Detailed description of each step may be specifically given with reference to Fig. 6 and a description thereof, and thus a detailed description will be omitted.

The step S150 of cutting the first electrode 200 positioned between the first electrode suction unit 111 and the third electrode suction unit 113 by the cutting unit 170 can be performed after the winding operation of the winding portion 400 is stopped. The above-mentioned step S150 may be embodied through a step of positioning the second normal electrode 220 on the first electrode suction unit 111 and positioning the defective electrode 230 on the third electrode suction part 113, a step of holding the second normal electrode 220 by the first electrode suction unit 111 and holding the defective electrode 230 by the third electrode suction unit 113, and a step of separating the defective electrode 230 and the second normal electrode 220 by the cutting unit 170. Here, the cutting unit 170 may be a second cutting unit. Detailed description of each step may be given in detail with reference to Fig. 7 and a description thereof, and thus a detailed description will be omitted.

The step S160 of positioning the first electrode suction unit 111 on the same plane as the second electrode suction unit 112 by rotating the first electrode suction unit 111 can be performed after completion of the operation of the cutting unit 170 is confirmed. The step S170 of connecting the first electrode 200 on the first electrode suction part 111 and the first electrode 200 on the second electrode suction part 112 by the taping unit 190 can be performed after the correspondence between the first electrode suction unit 111 and the second electrode suction unit 112 is confirmed. Here, the taping unit 190 may connect the first normal electrode 210 and the second normal electrode 220, and the taping unit 190 may be a first taping unit. The above-mentioned steps S160 and S170 can be described in detail with reference to Figs. 7 to 9 and a description thereof, and thus a detailed description will be omitted.

The electrode for a secondary battery according to another embodiment of the present disclosure may be manufactured by the above-mentioned electrode manufacturing device. The electrode for a secondary battery manufactured by the electrode manufacturing device described above may be applied to various secondary batteries. Such a secondary battery can be applied to a cylindrical battery having an electrode assembly mounted in a cylindrical metal can, a prismatic battery having an electrode assembly mounted in a prismatic metal can, and a pouch type battery having an electrode assembly mounted in a pouch-shaped case made of a laminated aluminum sheet, but the present disclosure is not limited thereto and is applicable to various secondary batteries in which the electrode for secondary batteries can be used, which also falls within the scope of the present disclosure.

Although the invention has been shown and described with reference to the preferred embodiments, the scope of the present disclosure is not limited thereto, and numerous changes and modifications can be devised by those skilled in the art using the principles of the invention defined in the appended claims.

### [Description of Reference Numerals]

100: electrode manufacturing device
111: first electrode suction unit
112: second electrode suction unit
113: third electrode suction unit
115: rotating unit
170: cutting unit
190: taping unit
200: first electrode
250: second electrode
300: guide roll
400: winding unit

## Claims

1. An electrode manufacturing device (100) comprising:
a first electrode suction unit (111) and a second electrode suction unit (112) that are configured to apply suction to a first electrode (200), the first electrode (200) including a normal electrode (210, 220) and a defective electrode (230);
a third electrode suction unit (113) that is configured to apply suction to a second electrode (250);
a rotating unit (115) that is connected to an end of the first electrode suction unit (111) and is configured to rotate the first electrode suction unit (111);
a cutting unit (170) that is configured to cut between the normal electrode (210, 220) and the defective electrode (230); and
a taping unit (190) that is positioned apart from and facing the cutting unit (170),
wherein, the device is configured so that when the cutting operation of the cutting unit is completed, the rotating unit (115) rotates so that the first electrode suction unit (111) is arranged on the same plane as the second electrode suction unit (112) or the third electrode suction unit (113),
wherein:
the cutting unit (170) includes a first cutting unit and a second cutting unit, and the taping unit (190) includes a first taping unit and a second taping unit,
the first cutting unit and the first taping unit are positioned between the first electrode suction unit (111) and the second electrode suction unit (112), and the second cutting unit and the second taping unit are positioned between the first electrode suction unit (111) and the third electrode suction unit (113).

2. The electrode manufacturing device (100) according to claim 1, wherein:
the first electrode suction unit (111), the second electrode suction unit (112), and the third electrode suction unit (113) respectively include a suction plate.

3. The electrode manufacturing device (100) according to claim 1, wherein:
the second electrode suction unit (112) and the third electrode suction unit (113) are arranged separately in a direction perpendicular to each other.

4. The electrode manufacturing device (100) according to claim 1, wherein:
the rotating unit (115) is composed of a motor and a worm gear.

5. The electrode manufacturing device (100) according to claim 1, wherein:
the cutting unit (170) is composed of a rodless cylinder.

6. The electrode manufacturing device (100) according to claim 1, wherein:
the normal electrode includes a first normal electrode (210) and a second normal electrode (220), and
the defective electrode (230) is positioned between the first normal electrode (210) and the second normal electrode (220).

7. The electrode manufacturing device (100) according to claim 6, wherein:
the first normal electrode (210) is positioned on the second electrode suction unit (112), and the first cutting unit is configured to cut between the first normal electrode (210) and the defective electrode (230).

8. The electrode manufacturing device (100) according to claim 7, wherein:
the first electrode suction unit (111) is configured to be rotated by the rotating unit (115) and connected to the third electrode suction unit (113), and
the defective electrode (230) is connected to the second electrode (250) by the second taping unit.

9. The electrode manufacturing device (100) according to claim 8, wherein:
the second taping unit is configured to attach a first adhesive sheet between the defective electrode (230) and the second electrode (250).

10. The electrode manufacturing device (100) according to claim 8,
which further comprises a winding unit (400) that is configured to wind at least a part of the connected defective electrode (230) and the second electrode (250).

11. The electrode manufacturing device (100) according to claim 10, wherein:
a length wound by the winding unit (400) is equal to or greater than the length of the defective electrode (230).

12. The electrode manufacturing device (100) according to claim 10, wherein:
the second normal electrode is (220) positioned in the first electrode suction unit (111) by the winding unit (400), and the second cutting unit is configured to cut between the second normal electrode (220) and the defective electrode (230).

13. The electrode manufacturing device (100) according to claim 12, wherein:
the first electrode suction unit (111) is configured to be rotated by the rotating unit (115) and configured to be connected to the second electrode suction unit (112), and
the first taping unit is configured to connect the second normal electrode (220) to the first normal electrode (210).

14. The electrode manufacturing device (100) according to claim 13, wherein:
the first taping unit is configured to attach a second adhesive sheet between the first normal electrode (210) and the second normal electrode (220).

15. The electrode manufacturing device (100) according to claim 1, wherein:
the device is configured to determine whether or not the cutting operation is completed based on the position of the cutting unit (170).

16. The electrode manufacturing device (100) according to claim 1, wherein:
the electrode manufacturing device (100) further comprises a detection unit,
the detection unit is configured to determine whether or not a defective electrode (230) is included in the first electrode (200), and
applying suction operations of the first electrode suction unit (111) and the second electrode suction unit (112) are configured to be performed based on the information acquired by the detection unit.

17. A method for manufacturing an electrode, which is performed by the electrode manufacturing device (100) of claim 1, the method comprising the steps of:
cutting the first electrode positioned (200) in the first electrode suction unit (111) and the second electrode suction unit (112) by the cutting unit (170), thus separating a normal electrode (210, 220) from a defective electrode (230);
positioning the first electrode suction unit (111) on the same plane as the third electrode suction unit (113) by rotating the rotating unit (115), and
connecting the defective electrode (230) on the first electrode suction unit (111) and the second electrode (250) on the third electrode suction unit (113) by the taping unit (190).

## Patentansprüche

1. Elektrodenherstellungsvorrichtung (100), umfassend:
eine erste Elektrodensogeinheit (111) und eine zweite Elektrodensogeinheit (112), welche dazu eingerichtet sind, einen Sog auf eine erste Elektrode (200) anzuwenden, wobei die erste Elektrode (200) eine normale Elektrode (210, 220) und eine defekte Elektrode (230) umfasst;
eine dritte Elektrodensogeinheit (113), welche dazu eingerichtet ist, einen Sog auf eine zweite Elektrode (250) anzuwenden;
eine Rotationseinheit (115), welche mit einem Ende der ersten Elektrodensogeinheit (111) verbunden und dazu eingerichtet ist, die erste Elektrodensogeinheit (111) zu rotieren;
eine Schneideinheit (170), welche dazu eingerichtet ist, zwischen der normalen Elektrode (210, 220) und der defekten Elektrode (230) zu schneiden; und
eine Tapingeinheit (190), welche entfernt von der Schneideinheit (170) und dieser zugewandt positioniert ist,
wobei die Vorrichtung eingerichtet ist, sodass, wenn der Schneidvorgang der Schneideinheit abgeschlossen ist, die Rotationseinheit (115) rotiert, sodass die erste Elektrodensogeinheit (111) auf der gleichen Ebene angeordnet ist wie die zweite Elektrodensogeinheit (112) oder die dritte Elektrodensogeinheit (113),
wobei:
die Schneideinheit (170) eine erste Schneideinheit und eine zweite Schneideinheit umfasst, und die Tapingeinheit (190) eine erste Tapingeinheit und eine zweite Tapingeinheit umfasst,
die erste Schneideinheit und die erste Tapingeinheit zwischen der ersten Elektrodensogeinheit (111) und der zweiten Elektrodensogeinheit (112) positioniert sind, und die zweite Schneideinheit und die zweite Tapingeinheit zwischen der ersten Elektrodensogeinheit (111) und der dritten Elektrodensogeinheit (113) positioniert sind.

2. Elektrodenherstellungsvorrichtung (100) nach Anspruch 1, wobei:
die erste Elektrodensogeinheit (111), die zweite Elektrodensogeinheit (112) und die dritte Elektrodensogeinheit (113) jeweils eine Sogplatte umfassen.

3. Elektrodenherstellungsvorrichtung (100) nach Anspruch 1, wobei:
die zweite Elektrodensogeinheit (112) und die dritte Elektrodensogeinheit (113) separat in Richtungen angeordnet sind, welche senkrecht zueinander sind.

4. Elektrodenherstellungsvorrichtung (100) nach Anspruch 1, wobei:
die Rotationseinheit (115) aus einem Motor und einem Schneckengetriebe besteht.

5. Elektrodenherstellungsvorrichtung (100) nach Anspruch 1, wobei:
die Schneideinheit (170) aus einem kolbenstangenlosen Zylinder besteht.

6. Elektrodenherstellungsvorrichtung (100) nach Anspruch 1, wobei:
die normale Elektrode eine erste normale Elektrode (210) und eine zweite normale Elektrode (220) umfasst, und
die defekte Elektrode (230) zwischen der ersten normalen Elektrode (210) und der zweiten normalen Elektrode (220) positioniert ist.

7. Elektrodenherstellungsvorrichtung (100) nach Anspruch 6, wobei:
die erste normale Elektrode (210) an der zweiten Elektrodensogeinheit (112) positioniert ist, und die erste Schneideinheit dazu eingerichtet ist, zwischen der ersten normalen Elektrode (210) und der defekten Elektrode (230) zu schneiden.

8. Elektrodenherstellungsvorrichtung (100) nach Anspruch 7, wobei:
die erste Elektrodensogeinheit (111) dazu eingerichtet ist, durch die Rotationseinheit (115) rotiert zu werden, und mit der dritten Elektrodensogeinheit (113) verbunden zu sein, und
die defekte Elektrode (230) durch die zweite Tapingeinheit mit der zweiten Elektrode (250) verbunden ist.

9. Elektrodenherstellungsvorrichtung (100) nach Anspruch 8, wobei:
die zweite Tapingeinheit dazu eingerichtet ist, einen ersten anhaftenden Bogen zwischen der defekten Elektrode (230) und der zweiten Elektrode (250) anzubringen.

10. Elektrodenherstellungsvorrichtung (100) nach Anspruch 8,
welche ferner eine Windungseinheit (400) umfasst, welche dazu eingerichtet ist,
wenigstens einen Teil der verbundenen defekten Elektrode (230) und der zweiten Elektrode (250) zu winden.

11. Elektrodenherstellungsvorrichtung (100) nach Anspruch 10, wobei:
eine Länge, welche durch die Windungseinheit (400) gewunden ist, gleich wie oder größer als die Länge der defekten Elektrode (230) ist.

12. Elektrodenherstellungsvorrichtung (100) nach Anspruch 10, wobei:
die zweite normale Elektrode (220) durch die Windungseinheit (400) in der ersten Elektrodensogeinheit (111) positioniert ist, und die zweite Schneideinheit dazu eingerichtet ist, zwischen der zweiten normalen Elektrode (220) und der defekten Elektrode (230) zu schneiden.

13. Elektrodenherstellungsvorrichtung (100) nach Anspruch 12, wobei:
die erste Elektrodensogeinheit (111) dazu eingerichtet ist, durch die Rotationseinheit (115) rotiert zu werden, und dazu eingerichtet ist, mit der zweiten Elektrodensogeinheit (112) verbunden zu sein, und
die erste Tapingeinheit dazu eingerichtet ist, die zweite normale Elektrode (220) mit der ersten normalen Elektrode (210) zu verbinden.

14. Elektrodenherstellungsvorrichtung (100) nach Anspruch 13, wobei:
die erste Tapingeinheit dazu eingerichtet ist, einen zweiten anhaftenden Bogen zwischen der ersten normalen Elektrode (210) und der zweiten normalen Elektrode (220) anzubringen.

15. Elektrodenherstellungsvorrichtung (100) nach Anspruch 1, wobei:
die Vorrichtung dazu eingerichtet ist, zu bestimmen, ob der Schneidvorgang abgeschlossen ist oder nicht basierend auf der Position der Schneideinheit (170).

16. Elektrodenherstellungsvorrichtung (100) nach Anspruch 1, wobei:
die Elektrodenherstellungsvorrichtung (100) ferner eine Detektionseinheit umfasst,
wobei die Detektionseinheit dazu eingerichtet ist, zu bestimmen, ob eine defekte Elektrode (230) in der ersten Elektrode (200) umfasst ist oder nicht; und
ein Anwenden von Sogvorgängen der ersten Elektrodensogeinheit (111) und der zweiten Elektrodensogeinheit (112) dazu eingerichtet ist, basierend auf den Informationen durchgeführt zu werden, welche durch die Detektionseinheit erlangt worden sind.

17. Verfahren zum Herstellen einer Elektrode, welches durch die Elektrodenherstellungsvorrichtung (100) nach Anspruch 1 durchgeführt wird,
wobei das Verfahren die Schritte umfasst von:
Schneiden der ersten Elektrode (200), welche in der ersten Elektrodensogeinheit (111) und der zweiten Elektrodensogeinheit (112) positioniert ist, durch die Schneideinheit (170) , dadurch Trennen einer normalen Elektrode (210, 220) von einer defekten Elektrode (230);
Positionieren der ersten Elektrodensogeinheit (111) auf der gleichen Ebene wie die dritte Elektrodensogeinheit (113) durch Rotieren der Rotationseinheit (115), und
Verbinden der defekten Elektrode (230) an der ersten Elektrodensogeinheit (111) und der zweiten Elektrode (250) an der dritten Elektrodensogeinheit (113) durch die Tapingeinheit (190).

## Revendications

1. Dispositif de fabrication d'électrode (100) comprenant :
une première unité d'aspiration d'électrode (111) et une deuxième unité d'aspiration d'électrode (112) qui sont configurées pour appliquer une aspiration à une première électrode (200), la première électrode (200) comportant une électrode normale (210, 220) et une électrode défectueuse (230) ;
une troisième unité d'aspiration d'électrode (113) qui est configurée pour appliquer une aspiration à une deuxième électrode (250) ;
une unité rotative (115) qui est connectée à une extrémité de la première unité d'aspiration d'électrode (111) et est configurée pour faire tourner la première unité d'aspiration d'électrode (111) ;
une unité de découpe (170) qui est configurée pour réaliser une découpe entre l'électrode normale (210, 220) et l'électrode défectueuse (230) ; et
une unité de rubanage (190) qui est positionnée à l'écart et en face de l'unité de découpe (170),
dans lequel le dispositif est configuré de sorte que, lorsque l'opération de découpe de l'unité de découpe est terminée, l'unité rotative (115) tourne de sorte que la première unité d'aspiration d'électrode (111) soit agencée sur le même plan que la deuxième unité d'aspiration d'électrode (112) ou la troisième unité d'aspiration d'électrode (113),
dans lequel :
l'unité de découpe (170) comporte une première unité de découpe et une deuxième unité de découpe, et l'unité de rubanage (190) comporte une première unité de rubanage et une deuxième unité de rubanage,
la première unité de découpe et la première unité de rubanage sont positionnées entre la première unité d'aspiration d'électrode (111) et la deuxième unité d'aspiration d'électrode (112), et la deuxième unité de découpe et la deuxième unité de rubanage sont positionnées entre la première unité d'aspiration d'électrode (111) et la troisième unité d'aspiration d'électrode (113).

2. Dispositif de fabrication d'électrode (100) selon la revendication 1, dans lequel :
la première unité d'aspiration d'électrode (111), la deuxième unité d'aspiration d'électrode (112) et la troisième unité d'aspiration d'électrode (113) comportent respectivement une plaque d'aspiration.

3. Dispositif de fabrication d'électrode (100) selon la revendication 1, dans lequel :
la deuxième unité d'aspiration d'électrode (112) et la troisième unité d'aspiration d'électrode (113) sont agencées séparément dans une direction perpendiculaire l'une à l'autre.

4. Dispositif de fabrication d'électrode (100) selon la revendication 1, dans lequel :
l'unité rotative (115) est composée d'un moteur et d'une vis sans fin.

5. Dispositif de fabrication d'électrode (100) selon la revendication 1, dans lequel :
l'unité de découpe (170) est composée d'un vérin sans tige.

6. Dispositif de fabrication d'électrode (100) selon la revendication 1, dans lequel :
l'électrode normale comporte une première électrode normale (210) et une deuxième électrode normale (220), et
l'électrode défectueuse (230) est positionnée entre la première électrode normale (210) et la deuxième électrode normale (220).

7. Dispositif de fabrication d'électrode (100) selon la revendication 6, dans lequel :
la première électrode normale (210) est positionnée sur la deuxième unité d'aspiration d'électrode (112), et la première unité de découpe est configurée pour réaliser une découpe entre la première électrode normale (210) et l'électrode défectueuse (230).

8. Dispositif de fabrication d'électrode (100) selon la revendication 7, dans lequel :
la première unité d'aspiration d'électrode (111) est configurée pour être tournée par l'unité rotative (115) et connectée à la troisième unité d'aspiration d'électrode (113), et
l'électrode défectueuse (230) est connectée à la deuxième électrode (250) par la deuxième unité de rubanage.

9. Dispositif de fabrication d'électrode (100) selon la revendication 8, dans lequel :
la deuxième unité de rubanage est configurée pour fixer une première feuille adhésive entre l'électrode défectueuse (230) et la deuxième électrode (250).

10. Dispositif de fabrication d'électrode (100) selon la revendication 8,
qui comprend en outre une unité d'enroulement (400) qui est configurée pour enrouler au moins une partie de l'électrode défectueuse (230) connectée et de la deuxième électrode (250).

11. Dispositif de fabrication d'électrode (100) selon la revendication 10, dans lequel :
une longueur enroulée par l'unité d'enroulement (400) est supérieure ou égale à la longueur de l'électrode défectueuse (230).

12. Dispositif de fabrication d'électrode (100) selon la revendication 10, dans lequel :
la deuxième électrode normale est (220) positionnée dans la première unité d'aspiration d'électrode (111) par l'unité d'enroulement (400), et la deuxième unité de découpe est configurée pour réaliser une découpe entre la deuxième électrode normale (220) et l'électrode défectueuse (230).

13. Dispositif de fabrication d'électrode (100) selon la revendication 12, dans lequel :
la première unité d'aspiration d'électrode (111) est configurée pour être tournée par l'unité rotative (115) et configurée pour être connectée à la deuxième unité d'aspiration d'électrode (112), et
la première unité de rubanage est configurée pour connecter la deuxième électrode normale (220) à la première électrode normale (210).

14. Dispositif de fabrication d'électrode (100) selon la revendication 13, dans lequel :
la première unité de rubanage est configurée pour fixer une deuxième feuille adhésive entre la première électrode normale (210) et la deuxième électrode normale (220).

15. Dispositif de fabrication d'électrode (100) selon la revendication 1, dans lequel :
le dispositif est configuré pour déterminer si l'opération de découpe est terminée ou non sur la base de la position de l'unité de découpe (170).

16. Dispositif de fabrication d'électrode (100) selon la revendication 1, dans lequel :
le dispositif de fabrication d'électrode (100) comprend en outre une unité de détection,
l'unité de détection est configurée pour déterminer si une électrode défectueuse (230) est incluse ou non dans la première électrode (200), et
l'application d'opérations d'aspiration de la première unité d'aspiration d'électrode (111) et de la deuxième unité d'aspiration d'électrode (112) est configurée pour être réalisée sur la base des informations acquises par l'unité de détection.

17. Procédé de fabrication d'une électrode, qui est réalisé par le dispositif de fabrication d'électrode (100) selon la revendication 1, le procédé comprenant les étapes suivantes :
la découpe de la première électrode positionnée (200) dans la première unité d'aspiration d'électrode (111) et de la deuxième unité d'aspiration d'électrode (112) par l'unité de découpe (170), séparant ainsi une électrode normale (210, 220) d'une électrode défectueuse (230) ;
le positionnement de la première unité d'aspiration d'électrode (111) sur le même plan que la troisième unité d'aspiration d'électrode (113) par rotation de l'unité rotative (115), et
la connexion de l'électrode défectueuse (230) sur la première unité d'aspiration d'électrode (111) et de la deuxième électrode (250) sur la troisième unité d'aspiration d'électrode (113) par l'unité de rubanage (190).
